## Europäisches Patentamt

(19) **European Patent Office**

**Office européen des brevets**

(11) Numéro de publication: **0 209 447**

**B1**

(12) # FASCICULE DE BREVET EUROPÉEN

(45) Date de publication du fascicule du brevet:
**27.12.89**

(51) Int. Cl.⁴: **B 05 B 5/04,** B 05 B 3/10

(21) Numéro de dépôt: **86401495.6**

(22) Date de dépôt: **04.07.86**

(54) **Tête atomisante rotative, notamment pour peinture électrostatique.**

(30) Priorité: **05.07.85 FR 8510314**

(43) Date de publication de la demande:
**21.01.87 Bulletin 87/4**

(45) Mention de la délivrance du brevet:
**27.12.89 Bulletin 89/52**

(84) Etats contractants désignés:
**CH DE GB LI**

(56) Documents cité:
**EP-A-0 034 254**
**DE-A-1 613 142**
**US-A-4 378 091**

**IEEE TRANSACTIONS ON MAGNETICS, vol. MAG-17, no. 1, janvier 1981, pages 1169-1173, IEEE, New York, US; J.-P. YONNET: "Permanent magnet bearings and couplings"**

(73) Titulaire: **SAMES S.A., Z.I.R.S.T. Chemin de Malacher, F-38240 Meylan (FR)**

(72) Inventeur: **Prus, Eric, Côteau Manguely, F-38430 Moirans (FR)**

(74) Mandataire: **CABINET BONNET- THIRION, 95 Boulevard Beaumarchais, F-75003 Paris (FR)**

LIBER, STOCKHOLM 1989

## Description

L'invention se rapporte à une tête atomisante rotative à grande vitesse, et particulièrement utilisable pour la projection de peinture ou vernis par voie électrostatique; elle concerne notamment un nouveau système de suspension de l'arbre rotatif portant le disque ou la coupelle de projection.

On connaît des appareils d'application de peinture par voie électrostatique comportant un organe de projection ayant la forme d'un disque ou d'une coupelle, tournant à grande vitesse, et porté à une haute tension électrique par rapport à la terre. Le liquide à projeter est déposé sur ce disque ou cette coupelle et divisé en fines particules sous l'effet des forces électriques et centrifuges qui lui sont appliquées. Les particules chargées sont attirées par la structure à recouvrir, électriquement connectée à la terre. La directivité du faisceau de particules peut être améliorée par des jets d'air en couronne à l'arrière de l'organe de projection. Pour obtenir un bel état de surface de la structure, il est nécessaire de réduire autant que possible la taille des particules. Pour cela, toutes choses égales par ailleurs, il est nécessaire d'augmenter la vitesse de rotation de l'organe de projection. Selon les types de têtes atomisantes, les vitesses varient dans d'assez larges proportions, de l'ordre de 1000 à 100 000 tours/minutes.

Selon une technique bien connue, l'arbre portant le disque ou la coupelle de projection est supporté par des roulements à billes ou à rouleaux. Ceux-ci assurent donc à la fois la suspension radiale de l'arbre et sa stabilisation axiale dans le corps de la tête atomisante. Les roulements lubrifiés une fois pour toute limitent la durée de vie du dispositif à quelques milliers d'heures.

On a tenté de lubrifier en permanence les roulements au moyen d'un brouillard d'huile mélangé à de l'air, pour augmenter la durée de vie. Cependant, ce type de réalisation se heurte à la difficulté d'éviter toute fuite d'huile susceptible de se mélanger à la peinture et dégrader l'aspect de la surface peinte.

Par ailleurs, pour une lubrification donnée, la durée de vie des roulements est inversement proportionnelle à la vitesse tangentielle de la partie mobile du roulement par rapport à sa partie fixe. On a donc été amené à réduire le diamètre des roulements et par conséquent celui de l'arbre d'entraînement de l'organe de projection. Cette démarche se heurte à des limites technologiques lorsqu'on cherche à obtenir des vitesses de rotation élevées. En particulier, il devient pratiquement impossible d'amener le produit à pulvériser par un conduit d'alimentation axiale traversant un arbre creux. C'est pourquoi, des systèmes d'alimentation latérale de produits à pulvériser ont été proposés.

Dans la suite de la description, on appellera "palier" tout agencement assurant (ou contribuant) à la suspension et au guidage radial de l'arbre et "butée" tout agencement assurant le positionnement axial par rapport au corps de la tête atomisante. Tout palier ou butée est caractérisé par sa raideur qui est le quotient de la force exercée sur l'arbre par le déplacememnt qui en résulte. La raideur des paliers à billes ou à rouleaux est très importante puisqu'ils peuvent supporter des charges considérables sans qu'il en résulte de déplacements très importants. Cependant, l'axe mécanique de l'arbre n'étant jamais confondu avec son axe principal d'inertie, les balourds qui en résultent sont à l'origine d'efforts très importants au niveau des cages de roulement et des billes ou rouleaux. La lubrification en est sérieusement affectée de sorte que ces balourds sont dans certaines circonstance la cause d'une destruction rapide des roulements. En outre, le roulement le plus proche de l'organe de projection est généralement mal protégé des émanations de peinture pulvérisée émises à proximité.

Des tentatives récentes ont été faites dans ce domaine technique pour supprimer au moins partiellement les paliers à roulements. Divers systèmes ont été proposés pour remplir les deux fonctions essentielles des roulements: la suspension et le guidage radial de l'arbre, d'une part et le positionnement axial de ce même arbre, à l'intérieur du corps, d'autre part.

On connaît ainsi un agencement ou ces deux fonctions sont assurées par des paliers fluidiques et par au moins une butée fluidique. Du gaz, généralement de l'air, est injecté sous pression entre des surfaces portantes radiales et axiales définies sur l'arbre et dans le corps de la tête atomisante. L'écoulement de ce gaz provoque la suspension totale de l'arbre, sans frottement mécanique direct avec le corps. Il en résulte une usure moindre et la possibilité de faire tourner l'arbre à grande vitesse sans qu'il soit nécessaire de réduire son diamètre. L'alimentation axiale du produit à pulvériser est donc possible. Cependant, pour une bonne efficacité du système, le jeu entre parties fixe et tournante doit être très faible (de l'ordre de quelques microns). L'usinage de ces parties doit donc être particulièremenet soigné. En outre, le faible jeu radial autorisé ne permet que de faibles débattements de l'arbre par rapport à son axe théorique de rotation. Les risques de contact entre l'arbre et les différents alésages dans lesquels il est logé sont donc assez élevés, notamment si, au cours de l'utilisation, des balourds ou des phénomènes d'instabilité et de résonance se manifestent. Enfin, la consommation d'air, donc d'énergie, reste importante' notamment au niveau des paliers fluidiques.

En ce qui concerne plus particulièrement le problème de la suspension radiale, un autre système décrit dans le brevet américain no 4 378 091 propose une combinaison de paliers fluidiques principaux, auto-alimentés par une aspiration naturelle d'air et d'un palier magnétique auxiliaire. Le rôle d'un tel palier est surtout d'assister les paliers fluidiques aux basses vitesses de rotation et d'éviter un contact entre les pièces, à la mise en route et à l'arrêt de l'appareil. Dans ce palier magnétique, l'aimantation est radiale et, par conséquent, le palier est réalisé par la coopération de deux aimants superposés radialement et s'interpénétrant. La faible raideur de la suspension magnétique ne peut être mise à profit dans un tel système pour faire face aux phénomènes d'instabilité mentionnés plus haut puisqu'un jeu critique subsiste au niveau des paliers fluidiques.

L'invention propose un perfectionnement lié à une autre structure de palier magnétique.

Dans cet esprit, l'invention concerne donc dans un premier mode de réalisation une tête atomisante rotative, notamment pour projection de peinture par voie électrostatique, du type comportant un arbre rotatif monté dans une cavité longidudinale d'un corps, des moyens d'entraînement dudit arbre et un organe de projection tel qu'un disque ou une coupelle, monté à une extrémité dudit arbre, faisant saillie axialement par rapport audit corps, caractérisée en ce qu'elle comporte au moins deux paliers magnétiques espacés axialement et assurant la suspension radiale dudit arbre, en ce que chaque palier comporte deux parties annulaires aimantées formant respectivement rotor et stator et disposées en regard l'une de l'autre en définissant entre elles un espace d'entrefer s'étendant au voisinage d'un plan sensiblement perpendiculaire à l'axe de symétrie dudit arbre, lesdites parties annulaires ayant leurs axes principaux de symétrie sensiblement confondus avec celui dudit arbre, en ce que les pièces polaires de ces paliers sont disposées de façon à développer des forces axiales opposées sur ledit arbre créant une position d'équilibre instable de ce dernier, et en ce qu'elle comporte un moyen de stabilisation axiale dudit arbre par rapport audit corps.

Dans la définition qui précède, les mots rotor et stator sont utilisés simplement pour distinguer de façon commode des parties annulaires aimantées mobiles ou fixes; il est bien évident cependant que dans l'exemple décrit ces parties aimantées n'ont aucune fonction motrice. Selon un mode de réalisation préféré, les parties annulaires aimantées se font face par deux zones polaires de types opposés: N-S, s'attirant mutuellement.

Ainsi, avec un tel palier magnétique à direction d'aimantation axiale on peut mettre à profit la faible raideur de ce type de palier (en supprimant les paliers fluidiques) pour faire face aux phénomènes de balourds et autres perturbations, puisque la longueur de l'entrefer conditionnant la force d'attraction entre les deux parties aimantées du palier est indépendante des jeux radiaux fonctionnels entre le rotor et le corps d'une part, et entre le stator et l'arbre d'autre part. Ces jeux fonctionnels peuvent être élargis sans conséquence sur la qualité de la suspension de l'arbre. Le moyen de stabilisation axiale précité dont il sera indiqué plusieurs variantes ci-dessous, permet de déterminer la longueur de l'espace d'entrefer entre les deux parties du palier magnétique et de la maintenir à une valeur constante.

L'invention concerne aussi, dans un second mode de réalisation, une tête atomisante rotative, notamment pour projection de peinture par voie électrostatique, du type comportant un arbre rotatif monté dans une cavité longitudinale d'un corps, des moyens d'entraînement dudit arbre et un organe de projection tel qu'un disque ou une coupelle, monté à une extrémité dudit arbre, faisant saillie axialement par rapport audit corps, caractérisée en ce qu'elle comporte un palier magnétique situé à proximité de l'extrémité de l'arbre qui porte ledit organe de projection et un roulement à rotule ou analogue monté entre ledit arbre et ledit corps et espacé axialement dudit palier magnétique, en ce que ce dernier comporte deux parties annulaires aimantées formant respectivement rotor et stator et disposées en regard l'une de l'autre en définissant entre elles un espace d'entrefer s'étendant au voisinage d'un plan perpendiculaire à l'axe de symétrie dudit arbre, lesdites parties annulaires ayant leurs axes principaux de symétrie sensiblement confondus avec celui dudit arbre, ledit roulement à rotule constituant un moyen de stabilisation axiale dudit arbre par rapport audit corps, tout en assurant avec ledit palier magnétique sa suspension radiale.

Il est particulièrement avantageux d'utiliser un tel palier magnétique au voisinage de l'extrémité d'arbre qui porte l'organe de projection car les émanations de liquide pulvérisé par le disque ou la coupelle sont sans effet sur le bon fonctionnement de ce type de palier. C'est en outre en cet endroit que des jeux importants sont nécessaires entre parties fixes et mobiles puisque c'est en cet endroit que les balourds sont susceptibles d'atteindre leur amplitude maximum.

Dans le premier mode de réalisation particulièrement adapté aux grandes vitesses de rotation, le moyen de stabilisation axiale est de préférence constitué d'une butée fluidique, connue en soi. En effet, la raideur d'une telle butée fluidique est notablement supérieure à ce que serait celle d'une butée magnétique; elle est donc moins exposée aux risques de contact entre parties fixes et mobiles. En outre, elle maintient efficacement l'arbre au voisinage de sa position d'équilibre instable.

L'invention sera mieux comprise et d'autres particularités avantageuses de celle-ci apparaîtront plus clairement à la lumière de la description qui va suivre d'une tête atomisante rotative conforme à son principe, donnée uniquement à titre d'exemple, et faite en référence aux dessins annexés dans lesquels:

- la figure 1 est une vue en coupe longitudinale d'une tête atomisante conforme à l'invention; et
- la figure 2 est une vue de détail des deux éléments d'un palier magnétique conforme à l'invention.

En se reportant aux dessins, on a représenté une tête atomisante 11 comportant un corps 12 abritant un arbre rotatif 13 et un organe de projection de liquide 14 sous la forme d'une coupelle montée à une extrémité axiale de l'arbre 13, faisant saillie hors du corps 12. L'arbre 13 est percé longitudinalement et monté coaxialement à un conduit longitudinal 15 solidaire du corps 12, par lequel le liquide à pulvériser (typiquement de la peinture ou du vernis) est amené à un injecteur 16 débouchant par un orifice 16a à l'intérieur d'une cavité 17 de la coupelle 14. Une paroi 18 de la cavité est pourvue d'une série d'orifices 19 agencés en couronne, par lesquels le liquide s'écoule sous l'effet de la force centrifuge communiquée par la rotation de la coupelle. Le liquide parvient ainsi jusqu'à l'arête de pulvérisation 14a de la coupelle. Par ailleurs, l'arbre 13 et la coupelle 14 sont en matériau conducteur et sont portés à une haute tension continue appliquée par un frotteur à charbon 20. Ce dernier est maintenu en contact avec la surface de l'arbre 13 par un système à ressort. Le corps 12 se compose d'un certain nombre de manchons 22 à 26 assemblés axialement par des épaulements complémentaires et dans lesquels sont définies des cavités recevant, entre autres, des moyens pneumatiques d'entraînement en rotation de l'arbre 13, deux paliers magnétiques 27, 28 et une butée axiale fluidique 29 alimentée en air comprimé. Une vanne pneumatique 30 est agencée à l'arrière du manchon 22; elle est alimentée en air comprimé par un conduit 31 pour commander le déplacement axial d'une tige 32 engagée dans le conduit 15 et munie, à l'une de ses extrémités, d'un pointeau 33 coopérant avec un siège annulaire 34 de l'injecteur 16, pour ne laisser passer le produit à pulvériser que lorsque la vanne 30 est effectivement reliée à une source d'air comprimé. Le produit à pulvériser est introduit dans le conduit 15 par un perçage radial 36 du manchon 22. Ce dernier comporte aussi deux gorges annulaires 38,39 fermées par un disque 40 intercalé entre les manchons 22 et 23. Ce disque est situé en regard d'une roue 41 formant turbine, solidaire de l'arbre 13 et susceptible de tourner librement dans une cavité 42 du manchon 23. Les gorges 38 et 39 communiquent respectivement avec des conduits de raccordement 38a, 39a, connectés à des sources d'air comprimé. Le disque 40 et la roue 41 comportent deux séries de perçages régulièrement répartis circulairement. Les perçages 40a du disque communiquent avec la gorge 38 et sont agencés en regard des perçages 41a de la roue tandis que les perçages 40b du disque communiquent avec la gorge 39 et sont agencés en regard des perçages 41b de la roue. Les perçages d'une même série circulaire sont inclinés par rapport à l'axe de rotation de la roue et dans des directions différentes pour chacune des deux séries de perçages de sorte que l'air comprimé injecté dans la gorge 38 provoque la mise en rotation de la roue 41 et de l'arbre 13 tandis que de l'air comprimé injecté dans la gorge 39 provoque le freinage. Les moyens d'entraînement en rotation de l'arbre 13 qui viennent d'être décrits sont classiques et ne font pas partie de l'invention. La cavité 42 est mise à l'atmosphère par un conduit 45, pour l'échappement libre de l'air moteur.

Selon l'invention, la suspension radiale de l'arbre 13 est assurée au moins partiellement par un premier palier magnétique 27 avantageusement situé au voisinage de l'extrémité d'arbre qui porte la coupelle 14. Dans l'exemple décrit, cette suspension radiale est assurée par deux paliers magnétiques semblables 27 et 28, espacés axialement l'un de l'autre. Chaque palier comporte deux parties annulaires aimantées 48,49 formant respectivement rotor (liée à l'arbre 13) et stator (fixée à l'intérieur du corps 12), disposées en regard l'une de l'autre de façon à définir entre elles un espace d'entrefer 50 s'étendant au voisinage d'un plan perpendiculaire à l'axe principal de symétrie de l'arbre 13. Avec un tel agencement où l'espace d'entrefer dans lequel se crée la force de suspension de l'arbre, s'étend dans un plan perpendiculaire à l'arbre et non plus dans un espace enveloppant ce dernier, il est possible, comme représenté, de prévoir des jeux fonctionnels importants entre le rotor et le corps 12 d'une part et le stator et l'arbre 13 d'autre part, autorisant ainsi des balourds importants en fonctionnement.

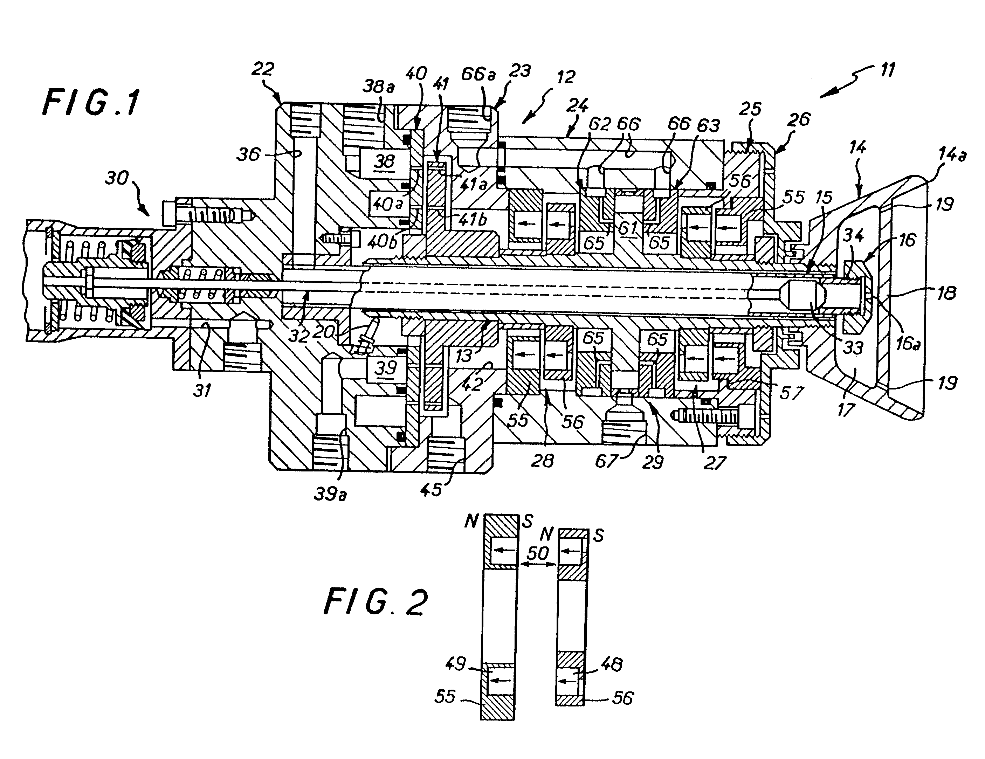

Dans l'exemple décrit, les parties aimantées se font face par deux zones polaires de types opposés N-S s'attirant mutuellement et leurs axes principaux de symétrie sont sensiblement confondus avec celui de l'arbre 13. De préférence, elles ont plus particulièrement la forme d'anneaux à faces axiales planes de sorte que chaque espace d'entrefer défini entre elles est de longueur constante, axialement. Chaque partie annulaire aimantée est logée dans une cage de stator 55 fixée à l'intérieur du corps 12 ou dans une cage de rotor 56 fixée à l'arbre 13. Cet agencement est surtout important pour les parties rotoriques parce que la cage joue alors un rôle de protection vis-à-vis de l'aimant, en évitant sa désintégration sous l'effet de la force centrifuge. Une cage 55 ou 56 comporte une rainure circulaire ouverte située en regard d'une rainure analogue de l'autre cage du palier magnétique. Les parties annulaires aimantées sont logées dans ces rainures. En considérant la figure 1, on constate que les cages de stator des deux paliers sont les plus éloignées axialement et que les cages de rotor sont les plus rapprochées ce qui, compte tenu de l'orientation des parties aimantées dans ces cages, aboutit à ce que les deux paliers magnétiques développent des forces axiales opposées sur l'arbre 13, créant une position d'équilibre instable de ce dernier. Cette position d'équilibre instable est obtenue grâce à des cales 57 d'épaisseur ajustable, interposées entre la cage de stator 55 du palier 27 et un épaulement du manchon 25 qui abrite cette cage.

Par ailleurs, la tête atomisante est pourvue d'un moyen de stabilisation axiale dudit arbre par rapport audit corps qui, dans l'exemple décrit, consiste en un agencement formant une butée fluidique 29, alimenté par air comprimé. Cette butée axiale, connue en soi' est située entre les deux paliers magnétiques 27 et 28. Elle comprend une couronne 61 solidaire de l'arbre 13 et ayant deux faces opposées parallèles en regard desquelles sont disposées deux parois 62, 63 fixes, munies chacune d'une série d'orifices 65 disposés circulairement et reliés à des conduits d'alimentation 66 en fluide sous pression. L'air comprimé est introduit par un orifice 66a et s'écoule de part et d'autre de la couronne 61 avant de s'échapper à l'atmosphère, en partie par un orifice 67 situé dans le prolongement radial de cette couronne et en partie en traversant les espaces où sont logés les paliers magnétiques.

La raideur de la butée fluidique 29 assure une bonne stabilité des entrefers des deux paliers magnétiques, en fonctionnement. La butée axiale contribue donc à la qualité de la suspension magnétique radiale. Une butée axiale de ce type est aussi préférable à une butée magnétique de faible raideur car les risques de contact entre les parties fixes et mobiles de la butée sont de ce fait plus faibles.

Comme mentionné précédemment, il est possible de trouver d'autres combinaisons associant une faible raideur de palier (pour accepter des balourds importants) à une forte raideur de butée. Ainsi, on peut supprimer la butée axiale 29 et le palier 28 et remplacer ces deux éléments par un roulement à rotule ou analogue (non représenté) monté entre l'arbre 13 et le corps 12 et de préférence relativement espacé axialement du palier 27. Le roulement à rotule peut ainsi être disposé sensiblement à la place du palier 28, en considérant la figure 1. En même temps qu'il contribuerait à la suspension radiale de l'arbre, il assurerait la stabilisation axiale de celui-ci et donc la valeur de l'entrefer du palier magnétique 27.

## Revendications

1. Tête atomisante rotative, notamment pour projection de peinture par voie électrostatique, du type comportant un arbre rotatif (13) monté dans une cavité longitudinale d'un corps (12), des moyens d'entraînement (40, 41) dudit arbre et un organe de projection (14) tel qu'un disque ou une coupelle, monté à une extrémité dudit arbre, faisant saillie axialement par rapport audit corps, *caractérisée en* ce qu'elle comporte au moins deux paliers magnétiques (27, 28) espacés axialement et assurant la suspension radiale dudit arbre, en ce que chaque palier comporte deux parties annulaires aimantées (48, 49) formant respectivement rotor et stator et disposées en regard l'une de l'autre en définissant entre elles un espace d'entrefer s'étendant au voisinage d'un plan sensiblement perpendiculaire à l'axe de symétrie dudit arbre, lesdites parties annulaires ayant leurs axes principaux de symétrie sensiblement confondus avec celui dudit arbre, en ce que les pièces polaires de ces paliers sont disposées de façon à développer des forces axiales opposées sur ledit arbre créant une position d'équilibre instable de ce dernier, et en ce qu'elle comporte un moyen de stabilisation axiale dudit arbre par rapport audit corps.

2. Tête atomisante rotative, notamment pour projection de peinture par voie électrostatique, du type comportant un arbre rotatif (13) monté dans une cavité longitudinale d'un corps (12), des moyens d'entraînement (40, 41) dudit arbre et un organe de projection (14) tel qu'un disque ou une coupelle, monté à une extrémité dudit arbre, faisant saillie axialement par rapport audit corps, *caractérisée en* ce qu'elle comporte un palier magnétique (27) situé à proximité de l'extrémité de l'arbre qui porte ledit organe de projection et un roulement à rotule ou analogue monté entre ledit arbre et ledit corps et espacé axialement dudit palier magnétique, en ce que ce dernier comporte deux parties annulaires aimantées (48, 49) formant respectivement rotor et stator et disposées en regard l'une de l'autre en définissant entre elles un espace d'entrefer s'étendant au voisinage d'un plan perpendiculaire à l'axe de symétrie dudit arbre, lesdites parties annulaires ayant leurs axes principaux de symétrie sensiblement confondus avec celui dudit arbre, ledit roulement à rotule constituant un moyen de stabilisation axiale dudit arbre par rapport audit corps, tout en assurant, avec ledit palier magnétique, sa suspension radiale.

3. Tête atomisante rotative selon la revendication 1 ou 2, *caractérisée en* ce que lesdites parties annulaires aimantées (48, 49) se font face par deux zones polaires de types opposés, s'attirant mutuellement.

4. Tête atomisante selon la revendication 1, *caractérisée en* ce que l'un des paliers magnétiques est situé à proximité de l'extrémité d'arbre qui porte ledit organe de projection (14).

5. Tête atomisante selon la revendication 1, *caractérisée en* ce que ledit moyen de stabilisation axiale consiste en un agencement formant butée axiale fluidique (29).

6. Tête atomisante selon la revendication 5, *caractérisée en* ce que ladite butée fluidique comprend une couronne (61) solidaire dudit arbre et comportant deux faces parallèles en regard desquelles sont respectivement pratiquées, dans deux parois parallèles fixes, deux séries d'orifices (65) disposés circulairement et des moyens d'alimentation en fluide sous pression, notamment en air, de ces orifices.

7. Tête atomisante selon la revendication 4 et l'une des revendications 5 ou 6, *caractérisée en* ce que ladite butée axiale fluidique est située entre les deux paliers magnétiques précités.

8. Tête atomisante selon l'une des revendications précédentes, *caractérisée en* ce que lesdites parties annulaires aimantées (48, 49) du ou de chaque palier magnétique ont la forme d'anneau à faces axiales planes.

9. Tête atomisante selon la revendication 8, *ca*-

ractérisée en ce que ladite partie annulaire aimantée formant rotor est logée dans une cage en forme générale de disque, solidaire dudit arbre et coaxiale à celui-ci, cette cage (56) comportant une rainure circulaire ouverte en regard dudit stator et dans laquelle est logée ladite partie annulaire aimantée formant rotor, pour éviter la désintégration de celle-ci sous l'effet de la force centrifuge.

**Patentansprüche**

1. Rotierender Zerstäuberkopf, insbesondere zur elektrostatischen Farbbeschichtung, mit einer in einer längsverlaufenden Ausnehmung eines Körpers (12) angeordneten Welle (13), Antriebsmitteln (40, 41) für die Welle und einem am Ende der Welle angeordneten, über den Körper in axialer Richtung überstehenden Sprühorgan (14) wie etwa einer Scheibe oder Glocke, *dadurch gekennzeichnet,* daß der Zerstäuberkopf mindestens zwei axial voneinander beabstandete, magnetische Lager (27, 28) zur schwimmenden radialen Lagerung der Welle umfaßt, daß jedes Lager zwei ringförmige magnetische Teile (48, 49) umfaßt, die einen Rotor bzw. einen Stator bilden und einander gegenüberliegend einen Luftspalt begrenzen, der sich in der Nähe einer zur Symmetrieachse der Welle zumindest annähernd rechtwinkligen Ebene erstreckt, wobei die Hauptsymmetrieachsen der ringförmigen Teile mindestens annähernd mit der Symmetrieachse der Welle zusammenfallen, daß die Polstücke dieser Lager derart angeordnet sind, daß sie entgegengesetzt gerichtete axiale Kräfte auf die Welle ausüben, die eine instabile Gleichgewichtslage letzterer erzeugen, und daß der Zerstäuberkopf ein Mittel zur axialen Stabilisierung der Welle in bezug auf den Körper umfaßt.

2. Rotierender Zerstäuberkopf, insbesondere zur elektrostatischen Farbbeschichtung, mit einer in einer längsverlaufenden Ausnehmung eines Körpers (12) angeordneten Welle (13), Antriebsmitteln (40, 41) für die Welle und einem am Ende der Welle angeordneten, über den Körper in axialer Richtung überstehenden Sprühorgan (14) wie etwa einer Scheibe oder Glocke, *dadurch gekennzeichnet,* daß der Zerstäuberkopf ein in der Nähe des das Sprühorgan tragenden Endes der Welle gelegenes, magnetisches Lager (27) umfaßt, sowie ein Rollenlager oder dergl., das beabstandet von dem magnetischen Lager zwischen der Welle und dem Körper angeordnet ist, daß das magnetische Lager zwei ringförmige magnetische Teile (48, 49) umfaßt, die einen Rotor bzw. einen Stator bilden und einander gegenüberliegend einen Luftspalt begrenzen, der sich in der Nähe einer zur Symmetrieachse der Welle mindestens annähernd rechtwinkligen Ebene erstreckt, wobei die Hauptsymmetrieachsen der ringförmigen Teile mindestens annähernd mit der Symmetrieachse der Welle zusammenfallen, daß das Rollenlager ein Mittel zur axialen Stabilisierung der Welle in bezug auf den Körper bildet und dabei aber mit dem magnetischen Lager die radial schwimmende Lagerung der Welle sicherstellt.

3. Rotierender Zerstäuberkopf nach Anspruch 1 oder 2, *dadurch gekennzeichnet,* daß die ringförmigen, magnetischen Teile (48, 49) sich mit zwei Polbereichen gegensinniger Polung, die sich wechselseitig anziehen, gegenüberstehen.

4. Zerstäuberkopf nach Anspruch 1 *dadurch gekennzeichnet,* daß sich eines der magnetischen Lager in der Nähe des das Sprühorgan (14) tragenden Endes der Welle befindet.

5. Zerstäuberkopf nach Anspruch 1 *dadurch gekennzeichnet,* daß das Mittel zur axialen Stabilisierung aus einer Anordnung besteht, die einen axialen Fluidanschlag (29) bildet.

6. Zerstäuberkopf nach Anspruch 5, *dadurch gekennzeichnet,* daß der Fluidanschlag einen mit der Welle drehfest verbundenen Kranz (61) umfaßt, der zwei parallele Flächen hat, denen gegenüber sich zwei Serien kreisförmig angeordneter Öffnungen (65) in zwei parallelen, ortsfesten Wänden befinden, und daß Mittel zur Speisung dieser Öffnungen mit einem unter Druck stehenden Fluid, insbesondere Luft, vorgesehen sind.

7. Zerstäuberkopf nach Anspruch 4 und einem der Ansprüche 5 oder 6, *dadurch gekennzeichnet,* daß der axiale Fluidanschlag sich zwischen den zwei magnetischen Lagern befindet.

8. Zerstäuberkopf nach einem der vorhergehenden Ansprüche, *dadurch gekennzeichnet,* daß die ringförmigen magnetischen Teile (48, 49) des oder jedes der magnetischen Lager die Form eines Ringes mit planen axialen Flächen haben.

9. Zerstäuberkopf nach Anspruch 8, *dadurch gekennzeichnet,* daß das den Rotor bildende ringförmige Teil in einem im wesentlichen scheibenförmigen Käfig angeordnet ist, der mit der Welle drehfest verbunden und koaxial zu dieser ist, wobei der Käfig (56) eine ringförmige, zu dem Stator hin offene Nut umfaßt, in der der ringförmige magnetische Teil, der den Rotor bildet, untergebracht ist, um dessen Bruch unter der Wirkung der Zentrifugalkraft zu vermeiden.

**Claims**

1. Rotary atomizer head, in particular for projecting paint by electrostatic means, of the type having a rotary shaft (13) mounted in a longitudinal cavity of a body (12), means (40, 41) for driving the said shaft and a projection member (14) such as a disc or a dish mounted at one end of the said shaft and projecting axially with respect to the said body, *characterized in* that it has at least two magnetic bearings (27, 28) spaced axially and providing the radial suspension of the said shaft, in that each bearing has two annular magnetized parts (48, 49) respectively forming the rotor and stator and placed opposite one another to define between them an air gap extending in the vicinity of a plane substantially perpendicular to the axis of symmetry of the said shaft, the said annular parts having their principal axes of symmetry substantially coinciding with that of the said shaft, in that the polar pieces of these bearings are placed such that they set up opposing axial forces on the said shaft, creating an unstable equilibrium position for the latter, and in that it has a means of axially stabilizing the said shaft with respect to the said body.

2. Rotary atomizer head, in particular for projecting paint by electrostatic means, of the type having a rotary shaft (13) mounted in a longitudinal cavity of a body (12), means (40, 41) for driving the said shaft and a projection member (14) such as a disc or a dish mounted at one end of the said shaft and projecting axially with respect to the said body, *characterized in* that it has a magnetic bearing (27) located in the vicinity of the end of the shaft carrying the said projection member and a spherical roller bearing or the like mounted between the said shaft and the said body and spaced axially from the said magnetic bearing, in that the latter has two annular magnetized parts (48, 49) respectively forming the rotor and stator and placed opposite one another to define between them an air gap extending in the vicinity of a plane perpendicular to the axis of symmetry of the said shaft, the said annular parts having their principal axes of symmetry substantially coinciding with that of the said shaft, the said spherical roller bearing forming a means of axially stabilizing the said shaft with respect to the said body while bringing about, with the said magnetic bearing, its radial suspension.

3. Rotary atomizer head according to Claim 1 or 2, *characterized in* that the said annular magnetized parts (48, 49) face one another by means of two polar zones of opposite types which attract one another.

4. Atomizer head according to Claim 1, *characterized in* that one of the magnetic bearings is located in the vicinity of the end of the shaft which carries the said projection member (14).

5. Atomizer head according to Claim 1, *characterized in* that the said means of axially stabilizing comprises an arrangement forming an axial fluid stop (29).

6. Atomizer head according to Claim 5, *characterized in* that the said fluid stop comprises a collar (61) integrally connected to the said shaft and having two parallel faces opposite which are respectively made in two fixed parallel walls two series of orifices (65) arranged in a circle and means of supplying a pressurized fluid, in particular air, to these orifices.

7. Atomizer head according to Claim 4 and to either of Claims 5 or 6, *characterized in* that the said axial fluid stop is located between the above-mentioned two magnetic bearings.

8. Atomizer head according to one of the preceding claims, *characterized in* that the said annular magnetized parts (48, 49) of the or of each magnetic bearing have the shape of a ring with plane axial faces.

9. Atomizer head according to Claim 8, *characterized in* that the said annular magnetized part forming the rotor is mounted in a generally disc-shaped casing which is integrally formed on the said shaft and coaxial therewith, this casing (56) having a circular groove which is open opposite the said stator and in which there is mounted the said annular magnetized part forming the rotor, to prevent the disintegration of the latter under the effect of the centrifugal force.

FIG.1

FIG.2

EP 0 209 447 B1